# EUROPEAN PATENT SPECIFICATION

(11) **EP 4 505 396 B1**
(45) Date of publication and mention of the grant of the patent: **27.05.2026**
(21) Application number: 24736268.4
(22) Date of filing: 06.06.2024
(51) Int. Cl.: G06T 5/60, G06T 5/70

(54) **SPATIALLY VARIANT NOISE REMOVAL FROM IMAGES USING DIFFUSION**
RÄUMLICH VARIANTE RAUSCHENTFERNUNG AUS BILDERN MITTELS DIFFUSION
ÉLIMINATION DE BRUIT VARIANT SPATIALEMENT D'IMAGES À L'AIDE D'UNE DIFFUSION

(30) Priority: 09.06.2023 US 202363507194 P
(43) Date of publication of application: 12.02.2025
(73) Proprietor: Google LLC, Mountain View, CA 94043 (US)
(72) Inventor: ZOMET, Assaf, Mountain View, California 94043 (US); BERMAN, Dana, Mountain View, California 94043 (US); PEARL, Naama, Mountain View, California 94043 (US); ACHA, Alex Rav, Mountain View, California 94043 (US); LISCHINSKI, Dani, Mountain View, California 94043 (US); COHEN-OR, Daniel, Mountain View, California 94043 (US); BRODSKY, Yaron, Mountain View, California 94043 (US)
(74) Representative: Betten & Resch
(86) International application number: PCT/US2024/032719
(87) International publication number: WO 2024/254250

(56) References cited:
- CN-A- 115 829 881
- DONG WEISHENG ET AL: "Denoising Prior Driven Deep Neural Network for Image Restoration", IEEE TRANSACTIONS ON PATTERN ANALYSIS AND MACHINE INTELLIGENCE, IEEE COMPUTER SOCIETY, USA, vol. 41, no. 10, 1 October 2019 (2019-10-01), pages 2305 - 2318, XP011743654, ISSN: 0162-8828, [retrieved on 20190903], DOI: 10.1109/TPAMI.2018.2873610
- YUTONG XIE ET AL: "Diffusion Model for Generative Image Denoising", ARXIV.ORG, CORNELL UNIVERSITY LIBRARY, 201 OLIN LIBRARY CORNELL UNIVERSITY ITHACA, NY 14853, 5 February 2023 (2023-02-05), XP091430019

## Description

### CROSS-REFERENCE TO RELATED APPLICATIONS

This application claims priority to U.S. Provisional Application No. 63/507,194, entitled "SPATIALLY VARIANT NOISE REMOVAL FROM IMAGES USING DIFFUSION," filed on June 9, 2023.

### BACKGROUND

Photographs, videos, and other images captured using a camera can include noise and/or lack detail due to a variety of factors such as limitations of the image capture sensor of the camera, lighting conditions under which the image is captured, etc. Computationally removing noise from the captured image can improve the quality of the image as perceived by the user and restore fine detail.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Dong Weisheng et al: "Denoising Prior Driven Deep Neural Network for Image Restoration", 01 October 2019 (2019-10-01), Vol. {0} 41, No. {0} 10, pages 2305 to 2318, XP011743654, DOl: 10.1109/TPAMI.2018.2873610, ISSN:0162-8828, first proposes a denoising-based image restoration (IR) algorithm with iterative steps. Then, the iterative process is unfolded into a deep neural network, which is composed of multiple denoisers modules interleaved with back-projection (BP) modules. A convolutional neural network (CNN) based denoiser that can exploit the multi-scale redundancies of natural images is proposed. As such, the proposed network not only exploits the powerful denoising ability of DNNs, but also leverages the prior of the observation model. Through end-to-end training, both the denoisers and the BP modules can be jointly optimized.

CN 115829881 describes systems, methods, and apparatus associated with denoising a medical image, such as a fluoroscopic image, using deep learning techniques. A first artificial neural network (ANN) is trained to de-noise the input medical image according to the provided target noise level. The training of the first ANN is performed by pairing a noisy input image with a target de-noised image comprising different noise levels. During different training iterations, the target de-noised images are generated using the second ANN as an intermediate output of the second ANN. Therefore, the first ANN can learn to execute the denoising task in an unsupervised manner.

Yutong Xie et al: "Diffusion Model for Generative Image Denoising", ARXIV.ORG, Cornell University Library, 201 OLIN LIBRARY CORNELL UNIVERSITY ITHACA, NY 14853,05 February 2023 (2023-02-05), XP091430019, regards the image denoising task as a problem of estimating the posterior distribution of clean images conditioned on noisy images. Yutong Xie et al applies the idea of diffusion model to realize generative image denoising. According to the noise model in denoising tasks, the diffusion process is redefined such that it is different from the original one. Hence, the sampling of the posterior distribution is a reverse process of dozens of steps from the noisy image. Yutong Xie et al considers three types of noise model, Gaussian, Gamma and Poisson noise.

### SUMMARY

Some implementations described herein relate to methods, devices, and computer-readable media to remove noise from an image using a machine-learned model trained to perform spatially variant noise removal. Some implementations described herein relate to methods, devices, and computer-readable media to train a machine learning model to perform spatially variant noise removal.

Some implementations relate to a computer-implemented method to denoise an image. In some implementations, a computer-implemented method to denoise a noisy input image includes obtaining the noisy input image that includes a plurality of pixels. The method further includes estimating a timemap based on the noisy input image and noise in the noisy input image, wherein the timemap is spatially-varying such that a respective timestep value is associated with each pixel of the noisy input image and wherein at least two pixels have different timestep values. The method further includes performing a diffusion process on the noisy input image, wherein the diffusion process is performed over two or more timesteps beginning at a highest value in the timemap. The diffusion process includes, at each timestep: estimating, using a machine-learned model (SVNR), a denoised image based on the noisy input image, a current timestep image, and the timestep; obtaining a next timestep image based on the denoised image and the current timestep image; for each pixel, if the timestep is greater than or equal to the timestep value associated with the pixel, updating the next timestep image with a corresponding value from the denoised image; after the updating, setting the next timestep image as the current timestep image ; and decrementing the timestep. The estimating, obtaining, updating, setting, and decrementing are repeated while the timestep is positive. The method further includes outputting the denoised image.

In some implementations, the method may further include determining the noise in the noisy input image. In these implementations, each pixel has a respective noise level, and determining the noise comprises determining a read-noise, and a shot-noise from the noisy input image. In these implementations, the timemap encodes spatially varying noise for the noisy input image.

In some implementations, at a first timestep while performing the diffusion process, the noisy input image is used as the current timestep image. In some implementations, The computer-implemented method of claim 1, wherein the noisy input image acts as a condition image during the diffusion process.

Some implementations relate to a method to train a machine learning model to denoise a noisy input image. In some implementations, the method to train a machine learning model to denoise a noisy input image includes obtaining a clean image. The method further includes generating a noisy input image by adding noise to the clean image wherein the noise is determined based on a per-pixel standard deviation of noise. The method further includes estimating a timemap based on the noisy input image and the noise in the noisy input image. In some implementations, the timemap is spatially-varying such that a respective timestep value is associated with each pixel of the noisy input image, wherein at least two pixels have different timestep values. The method further includes generating a new timemap, wherein a respective timestep value for pixels in the new timemap is lower than the timestep values for the corresponding pixels in the timemap. The method further includes generating based on the new timemap, wherein the current timestep image has lower noise than the noisy input image. The method further includes estimating, using the machine-learning model, a denoised image based on the noisy input image, the current timestep image, and the new timemap. The method further includes calculating a loss value based on a comparison of the denoised image and the clean image. The method further includes updating one or more parameters of the machine learning model based on the loss value.

In some implementations, the standard deviation of noise is a combination of a read-noise and a shot-noise. In these implementations, the read-noise is a standard deviation for signal-independent noise and the shot-noise is a standard deviation for signal-dependent noise. In some implementations, the read-noise and the shot-noise are randomly selected.

In some implementations, generating the new timemap comprises subtracting a scalar from a respective timestep value for each pixel in the timemap, wherein the scalar has a value between zero and a maximum timestep value in the timemap.

In some implementations, generating the current timestep image based on the new timemap comprises sampling noise based on the new timemap. In some implementations, the current timestep image has a noise distribution similar to a noise distribution of the noisy input image.

In some implementations, the machine learning model includes a neural network. In these implementations, updating the one or more parameters of the machine learning model based on the loss value includes performing backpropagation to adjust weights of one or more nodes of the neural network.

In some implementations, obtaining the clean image, generating the noisy input image, estimating the timemap, generating the new timemap, generating the current timestep image, estimating the denoised image, calculating the loss value, and updating the one or more parameters of the machine learning model are performed iteratively until a stopping criterion is met. In some implementations, the stopping criterion includes one or more of: a computational budget for training being exhausted or a change in parameter values of at least one of the one or more parameters between successive iterations falling below a threshold.

Some implementations include a computing device comprising a processor and a memory coupled to the processor with instructions stored thereon that, when executed by the processor, cause the processor to perform any of the methods described herein.

Some implementations include a non-transitory computer-readable medium with instructions stored thereon that, when executed by a processor, cause the processor to perform any of the methods described herein.

### BRIEF DESCRIPTION OF THE DRAWINGS

Fig. 1 illustrates a block diagram of an example network environment, which may be used in some implementations described herein.
Fig. 2 is a flow diagram illustrating an example method to denoise a noisy input image, according to some implementations.
Fig. 3 is a flow diagram illustrating an example method to perform a diffusion process, according to some implementations.
Fig. 4A-4B illustrate example images.
Fig. 5 illustrates examples of noisy images with corresponding denoised images and ground truth images.
Fig. 6 is a flow diagram illustrating an example method to train a machine learning model to denoise a noisy input image, according to some implementations.
Fig. 7 is a block diagram of an example device which may be used to implement one or more features described herein.

### DETAILED DESCRIPTION

Methods, systems, and non-transitory computer readable-media for noise removal from noisy input images are described herein. The described techniques provide a new diffusion-based framework for the task of image denoising. The techniques leverage a natural rich image prior learned by generative denoising diffusion models. In some implementations, the techniques perform the denoising diffusion by utilizing a noisy input image as both a condition and a starting point of the diffusion process. To enable the integration of a realistic noisy image as a sample in the diffusion process, the techniques employ a denoising diffusion formulation that utilizes a spatially-variant time embedding (time map). Techniques to train a machine learning model to perform noise removal using a spatially-variant timemap and to utilize the machine learning model to remove noise from images are described herein. The described techniques can be applied for noise removal from any noisy image, including images with a non-uniform noise distribution.

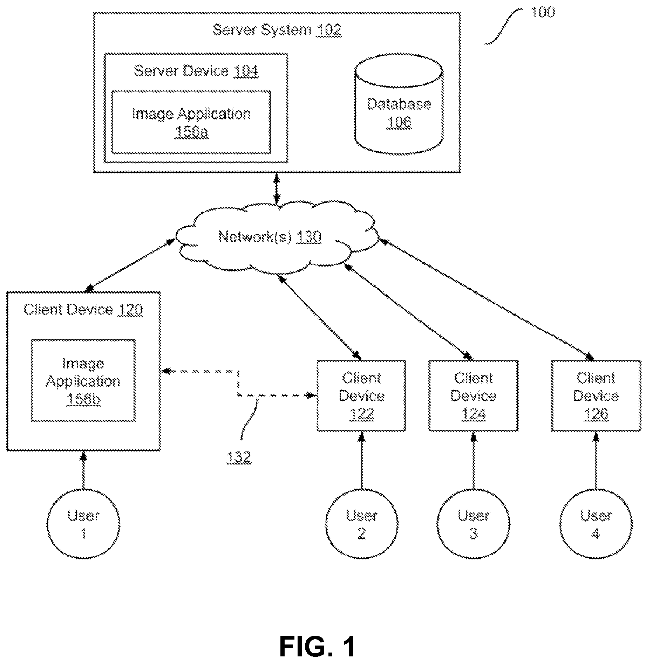

Fig. 1 illustrates a block diagram of an example network environment 100, which may be used in some implementations described herein. In some implementations, network environment 100 includes one or more server systems, e.g., server system 102 in the example of Fig. 1. Server system 102 can communicate with a network 130, for example. Server system 102 can include a server device 104 and a database 106 or other storage device. In some implementations, server device 104 may provide an image application 156a.

Network environment 100 also can include one or more client devices, e.g., client devices 120, 122, 124, and 126, which may communicate with each other and/or with server system 102 via network 130. Network 130 can be any type of communication network, including one or more of the Internet, local area networks (LAN), wireless networks, switch or hub connections, etc. In some implementations, network 130 can include peer-to-peer communication between devices, e.g., using peer-to-peer wireless protocols (e.g., Bluetooth^{®}, Wi-Fi Direct, etc.), etc. One example of peer-to-peer communications between two client devices 120 and 122 is shown by arrow 132.

For ease of illustration, Fig. 1 shows one block for server system 102, server device 104 and database 106, and four blocks for client devices 120, 122, 124, and 126. Server blocks 102, 104, and 106 may represent multiple systems, server devices, and network databases, and the blocks can be provided in different configurations than shown. For example, server system 102 can represent multiple server systems that can communicate with other server systems via the network 130. In some implementations, server system 102 can include cloud hosting servers, for example. In some examples, database 106 and/or other storage devices can be provided in server system block(s) that are separate from server device 104 and can communicate with server device 104 and other server systems via network 130.

Also, there may be any number of client devices. Each client device can be any type of electronic device, e.g., desktop computer, laptop computer, portable or mobile device, cell phone, smartphone, standalone camera, tablet computer, television, TV set top box or entertainment device, wearable devices (e.g., display glasses or goggles, wristwatch, headset, armband, jewelry, etc.), personal digital assistant (PDA), media player, game device, etc. Some client devices may also have a local database similar to database 106 or other storage. In some implementations, network environment 100 may not have all of the components shown and/or may have other elements including other types of elements instead of, or in addition to, those described herein.

In various implementations, end-users U1, U2, U3, and U4 may communicate with server system 102 and/or each other using respective client devices 120, 122, 124, and 126. In some examples, users U1, U2, U3, and U4 may interact with each other via applications running on respective client devices and/or server system 102, and/or via a network service, e.g., a social network service or other type of network service, implemented on server system 102. For example, respective client devices 120, 122, 124, and 126 may communicate data to and from one or more server systems (e.g., system 102).

In some implementations, the server system 102 may provide appropriate data to the client devices such that each client device can receive communicated content or shared content uploaded to the server system 102 and/or network service. In some examples, users U1-U4 can interact via audio or video conferencing, audio, video, or text chat, or other communication modes or applications.

A network service implemented by server system 102 can include a system allowing users to perform a variety of communications, form links and associations, upload and post shared content such as images, text, video, audio, and other types of content, and/or perform other functions. For example, a client device can display received data such as content posts sent or streamed to the client device and originating from a different client device via a server and/or network service (or from the different client device directly), or originating from a server system and/or network service. In some implementations, client devices can communicate directly with each other, e.g., using peer-to-peer communications between client devices as described above. In some implementations, a "user" can include one or more programs or virtual entities, as well as persons that interface with the system or network.

In some implementations, any of client devices 120, 122, 124, and/or 126 can provide one or more applications. For example, as shown in Fig. 1, client device 120 may provide applications 156b. Client devices 122-126 may also provide similar applications.

In some implementations, a client device may include applications that provide various types of functionality, e.g., calendar, address book, e-mail, web browser, shopping, transportation (e.g., taxi, train, airline reservations, etc.), entertainment (e.g., a music player, a video player, a gaming application, etc.), social networking (e.g., messaging or chat, audio/video calling, sharing images/ video, etc.) and so on. In some implementations, one or more of the applications may be standalone applications that execute on client device 120. In some implementations, one or more of the applications may access a server system, e.g., server system 102, that provides data and/or functionality of the applications.

A user interface on a client device 120, 122, 124, and/or 126 can enable the display of user content and other content, including images, video, data, and other content as well as communications, privacy settings, notifications, and other data. Such a user interface can be displayed using software on the client device, software on the server device, and/or a combination of client software and server software executing on server device 104, e.g., application software or client software in communication with server system 102. The user interface can be displayed by a display device of a client device or server device, e.g., a touchscreen or other display screen, projector, etc. In some implementations, application programs running on a server system can communicate with a client device to receive user input at the client device and to output data such as visual data, audio data, etc. at the client device.

In various implementations, any of client devices 120-126 may be used by a user and/or a customer service agent (e.g., a human customer service agent). In some implementations, application 156 on server system 102 and/or one or more of client devices (120-126) may denoise an image by using a machine learned model that performs spatially variant noise removal. In some implementations, application 156 on server system 102 and/or one or more of client devices (120-126) may train a machine learning model to perform spatially variant noise removal.

In some implementations, database 106 may store content items, e.g., ground truth images (clean images), noisy images, or other images. In various implementations, content items may include help articles that include text, audio, video, images, or any combination thereof. Users of client devices 120-126 may access the content items over the network 130.

Other implementations of features described herein can use any type of system and/or service. For example, other networked services (e.g., connected to the Internet) can be used instead of or in addition to a social networking service. Any type of electronic device can make use of features described herein. Some implementations can provide one or more features described herein on one or more client or server devices disconnected from or intermittently connected to computer networks. In some examples, a client device including or connected to a display device can display content posts stored on storage devices local to the client device, e.g., received previously over communication networks.

An image as referred to herein can include a digital image having pixels with one or more pixel values (e.g., color values, brightness values, etc.). An image can be a still image (e.g., still photos, images with a single frame, etc.), a dynamic image (e.g., animations, animated GIFs, cinemagraphs where a portion of the image includes motion while other portions are static, etc.), or a video (e.g., a sequence of images or image frames that may include audio). While the remainder of this document refers to an image as a static image, it may be understood that the techniques described herein are applicable for dynamic images, video, etc. For example, implementations described herein can be used with still images (e.g., a photograph, or other image), videos, or dynamic images.

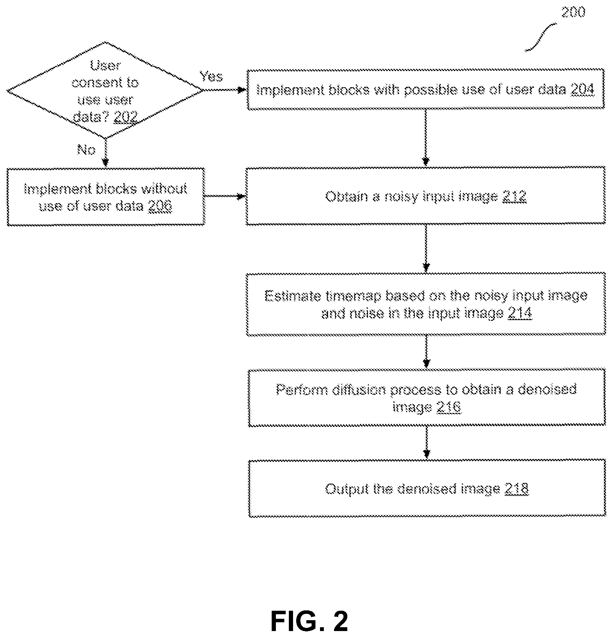

Fig. 2 is a flow diagram illustrating an example method 200 to denoise a noisy input image, according to some implementations. In some implementations, method 200 can be implemented, for example, on a server system 102 as shown in Fig. 1. In some implementations, some or all of the method 200 can be implemented on one or more client devices 120, 122, 124, or 126 as shown in Fig. 1, one or more server devices, and/or on both server device(s) and client device(s). In described examples, the implementing system includes one or more digital processors or processing circuitry ("processors"), and one or more storage devices (e.g., a database 106 or other storage). In some implementations, different components of one or more servers and/or clients can perform different blocks or other parts of the method 200. In some examples, a first device is described as performing blocks of method 200. Some implementations can have one or more blocks of method 200 performed by one or more other devices (e.g., other client devices or server devices) that can send results or data to the first device.

In some implementations, the method 200, or portions of the method, can be initiated automatically by a system. In some implementations, the implementing system is a first device. For example, the method (or portions thereof) can be periodically performed, or performed based on one or more particular events or conditions, e.g., an image being captured by a camera, an image being added to an image library, an image being received (e.g., from another device, via a scanner, etc.) or viewed (e.g., in an image viewing application), etc., a predetermined time period having expired since the last performance of method 200, and/or one or more other conditions occurring which can be specified in settings read by the method.

Method 200 may begin at block 202. At block 202, it is checked whether user consent (e.g., user permission) has been obtained to use user data in the implementation of method 200. For example, user data can include one or more images, e.g., captured or viewed by a user using a client device (e.g., any of devices 120-126). One or more blocks of the methods described herein may use such user data in some implementations.

If user consent has been obtained from the relevant users for which user data may be used in the method 200, then in block 204, it is determined that the blocks of the methods herein can be implemented with possible use of user data as described for those blocks, and the method continues to block 210. If user consent has not been obtained, it is determined in block 206 that blocks are to be implemented without the use of user data, and the method continues to block 210. In some implementations, if user consent has not been obtained, blocks are implemented without the use of user data and with synthetic data and/or generic or publicly-accessible and publicly-usable data. In some implementations, if user consent has not been obtained, the rest of method 200 is not performed.

At block 212, a noisy input image is obtained. The noisy input image includes a plurality of pixels, each with an associated pixel value, e.g., a value for each of red, green, and blue (RGB) channels for an RGB image, or additional values. In some implementations, the pixel values for the noisy input image may include a luminance value, a depth value, or other values.

For example, the noisy input image may be captured by a camera of a client device (any of client devices 120-126) or a scanner of a client device; received from another device (e.g., when method 200 is implemented on a server or a client device, received from another client device over a network or via a local interface); received from a hardware scanner; received from a camera device (e.g., a security camera or other camera); etc. In some implementations, the noisy input image may be captured in low light conditions. Noise in the noisy input image may include shot noise which depends on the total amount of light captured (e.g., based on exposure time) and is therefore signal-dependent. Noise in the noisy input image may also include read noise introduced by a sensor used to capture the noisy input image, e.g., a complementary metal-oxide semiconductor (CMOS) sensor, a charge-coupled device (CCD) sensor, or other type of sensor used to capture digital images. Read noise depends on the sensor and is therefore signal-independent such that it does not depend on the amount of light captured. Block 212 may be followed by block 214.

At block 214, a timemap for the noisy input image is estimated based on the noisy input image and noise in the input image. In some implementations, each pixel p in the noisy input image may be associated with a respective noise level. A corresponding timestep value may yield this noise level during a diffusion process. The maximum noise level over the image (e.g., three channels R, G, and B( may define the time map. In other words, each pixel in the noisy input image may be at a respective stage of the diffusion process.

In some implementations, the timemap is a spatially varying timemap such that the timemap includes a respective timestep value (e.g., that includes a time embedding) for each pixel the noisy input image. In some implementations, at least two pixels of the noisy input image may have different timestep values. In some implementations, the timestep value may be utilized to apply an affine transformation to each pixel, independent of transformations applied to other pixels of the noisy input image. In some implementations, each pixel is associated with a respective time value which is converted to time embedding (vector). In these implementations, the vectors of all pixels are multiplied by a matrix (which is the affine transformation). The timestep values in the noisy input image may be based on the noise.

In some implementations, noise in the noisy input image may be determined prior to estimating the timemap. In these implementations, determining the noise level may include determining a read-noise (σᵣ), and a shot-noise (σₛ) from the noisy input image. In these implementations, the read-noise is a standard deviation for signal-independent noise (e.g., based on sensor characteristics of the sensor that captured the noisy input image) and the shot-noise is a standard deviation for signal-dependent noise (e.g., impacted by conditions such as total amount of light captured by a sensor at the time of capture of the noisy input image).

In some implementations, a clipped version of the noisy input image may be utilized to estimate the noise. Block 214 may be followed by block 216.

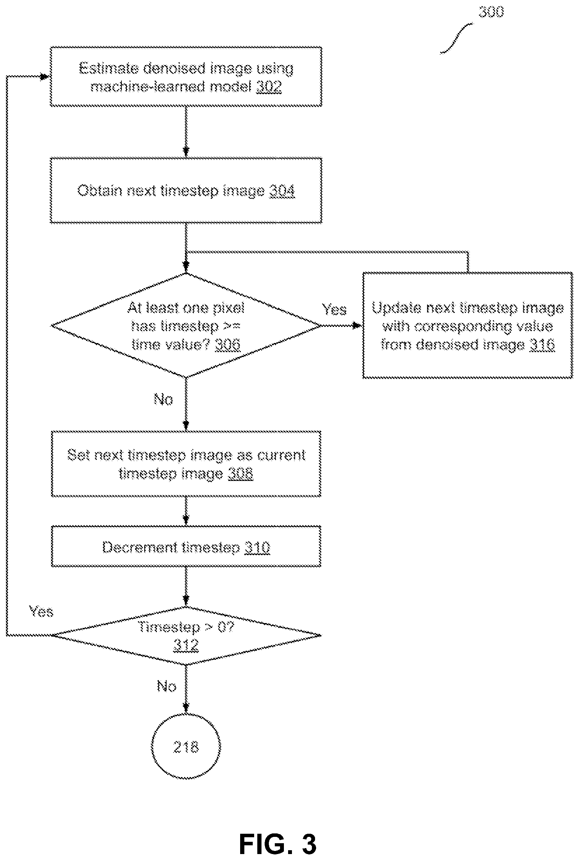

At block 216, a diffusion process using a machine learning model is performed to obtain a denoised image. In some implementations, the machine learning model may be a trained machine learning model, trained to perform spatially-variant noise removal (SVNR). In some implementations, the diffusion process may be performed using method 300 described below with reference to Fig. 3. Block 216 may be followed by block 218.

At block 218, the denoised image is output. For example, the denoised image may be displayed on a display device, e.g., a monitor, a projector, augmented reality device, or other device capable of displaying images. In some implementations, the denoised image may be output to a printer device to produce a physical print of the denoised image. In some implementations, the denoised image may be output to a system that performs additional operations, e.g., editing, compression, format conversion, or other operations.

Various blocks of method 200 may be combined, split into multiple blocks, or be performed in parallel. Method 200, or portions thereof, may be repeated any number of times using additional inputs. For example, method 200 may be repeated until all images captured by a camera are processed to obtain corresponding denoised images.

Fig. 3 is a flow diagram illustrating an example method 300 to perform a diffusion process, according to some implementations. In some implementations, method 300 can be implemented, for example, on a server system 102 as shown in Fig. 1. In some implementations, some or all of the method 200 can be implemented on one or more client devices 120, 122, 124, or 126 as shown in Fig. 1, one or more server devices, and/or on both server device(s) and client device(s). In described examples, the implementing system includes one or more digital processors or processing circuitry ("processors"), and one or more storage devices (e.g., a database 106 or other storage). In some implementations, different components of one or more servers and/or clients can perform different blocks or other parts of the method 300. In some examples, a first device is described as performing blocks of method 300. Some implementations can have one or more blocks of method 300 performed by one or more other devices (e.g., other client devices or server devices) that can send results or data to the first device.

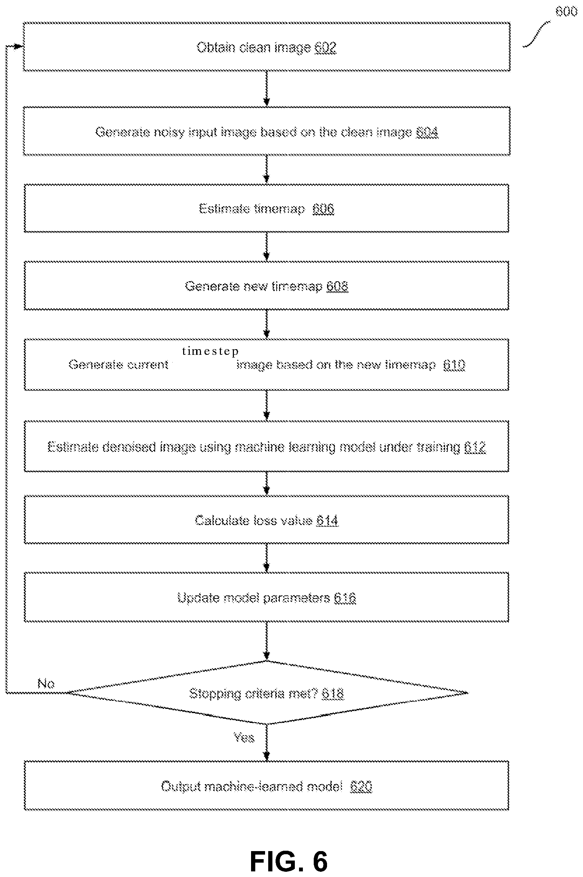

Method 300 may begin at block 302. At block 302, a denoised image is estimated using a machine-learned model (trained machine learning model). The model is trained to perform spatially variant noise removal (SVNR) based on a timemap, e.g., as described with reference to block 214 of method 200, and may be referred to herein as SVNR model. An example method to train a machine learning model to perform spatially variant noise removal (SVNR) is described with reference to Fig. 6. In some implementations, method 300 is initiated with the highest value in the timemap.

In some implementations, the SVNR model estimates the denoised image based on the noisy input image, a current timestep image (which for the first timestep may be the as the noisy input image), and the timestep. Block 302 may be followed by block 304.

At block 304, a next timestep image is obtained. In some implementations, obtaining the next timestep image (x_{t_hat-1}) is based on the denoised image (x₀) obtained in block 302, and the current timestep image (x_{t_hat}). In some implementations, obtaining the next timestep image may further include sampling a Gaussian noise. In some implementations, the sampling may depend on the current timemap (and the timestep images) to determine respective weights for each of the components). Block 304 may be followed by block 306.

At block 306, it is determined whether at least one pixel is associated with a timestep value that is greater than or equal to the current timestep. If it is determined that at least one pixel is associated with a timestep value that is greater than or equal to the current timestep, block 306 may be followed by block 316. Else, block 302 may be followed by block 308.

At block 308, the next timestep image (e.g., obtained in block 304) is set as the current step image. Block 308 may be followed by block 310.

At block 310, the timestep is decremented. Block 310 may be followed by block 312.

At block 312, it is determined if the current timestep is positive. A positive timestep may indicate that at least one pixel of the noisy input image has a timestep value greater than zero, such that the diffusion process for the pixel is not yet complete. If the current timestep is positive, block 312 is followed by block 203. In implementations where method 300 is used to implement block 216 of method 200, if the current timestep is not positive, block 312 may be followed by block 218 to output the denoised image.

At block 316, which is performed if it is determined that at least one pixel is associated with a timestep value that is greater than or equal to the current timestep, the next timestep image (obtained in block 304) is updated with a corresponding value from the denoised image (obtained in block 302). This ensures that further denoising of pixels that have reached a timestep value of zero (have been denoised based on the timemap) is avoided and instead, their values are stable as obtained in the denoised image, while continuing to perform further denoising operations for other pixels continues. This provides spatially-varying noise removal, since different pixels may reach the timestep value of zero in different iterations of method 300. During the updating, if the value of a pixel p in the timemap is less than 0, the value of the pixel is set to X_{t_hat}(p) (e.g., instead of setting the value to X_{t_hat-1}(p)). Method 300 may be performed over at least two timesteps.

Replacing a single timestep value (that defines the number of iterations to be performed) with a spatially varying timemap causes the diffusion operation to be performed on a per-pixel basis. The use of a pixel-specific timestep value (time embedding) in the timemap makes noise removal by the SVNR model dependent on spatially-varying noise level in the noisy input image. Thus, denoising using the SVNR model can reduce shot noise which is signal-dependent together with read noise which is signal-independent.

The diffusion process described with reference to Fig. 3 is performed with the noisy input image as a condition image.

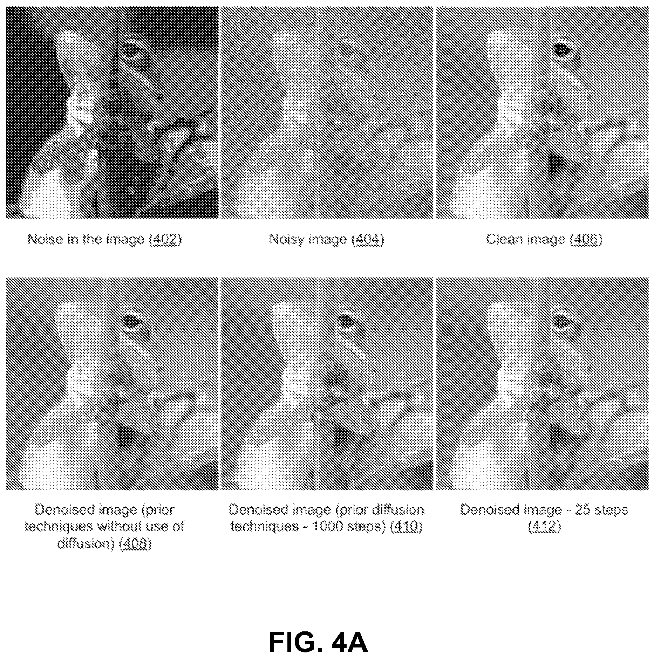

Fig. 4A illustrates example images. Fig. 4A depicts a noisy input image (404) of a lizard. In some implementations, a noisy input image may be generated by adding simulated noise to an image. For example, the noisy input image may be captured in low light conditions, or other conditions due to which the captured may include noise. Noise in the image (402) is shown where the noise value (illustrated in different shades) is the spatially-variant standard deviation of noise in the image (quantized). A corresponding clean image (406) is also shown. For example, the clean image may be captured in good lighting conditions or with a camera that can capture relatively noise-free images in low light conditions.

Further, in some implementations, noisy images (e.g., for use in training of machine learning models) may be generated by applying a spatially-variant noise to a known clean image. In this case, the known clean image may serve as groundtruth during training of a machine learning model, e.g., to train the machine learning model to remove noise from the generated noisy image. For example, for the techniques described above with reference to Figs. 2 and 3, the noisy image may act as a condition image and the groundtruth image is used for comparison, e.g., to train the machine learning model to remove noise from noisy images by using the groundtruth image to compare with the output of the diffusion process. The techniques described herein handles (removes) spatially-variant noise by applying a pixel-wise time embedding, e.g., as described above with reference to Fig. 2 and the spatially varying timemap.

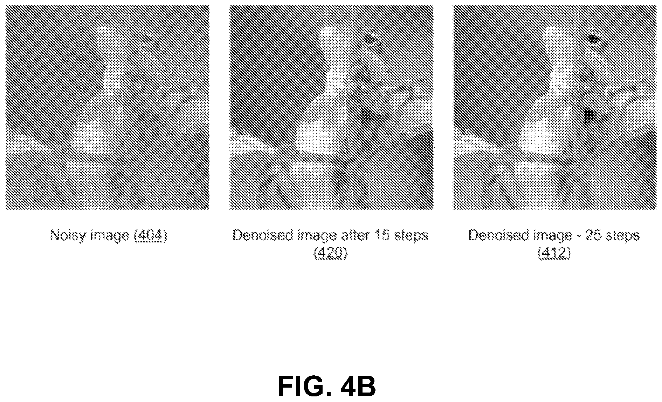

Fig. 4A also depicts a denoised image (408) obtained by applying an example prior technique that does not utilize diffusion to the noisy input image (404). Fig. 4 further shows another example of a denoised image (410) obtained by applying prior diffusion techniques to the noisy input image (404). The denoised image (410) is obtained after 1,000 time steps of the diffusion process. It can be seen in the denoised images (408, 410) that while such prior denoising methods remove high levels of noise, such methods over-smooth fine details and/or the resulting denoised images lack high frequency details. For example, while denoised image 410 has more high frequency than denoised image 412, a portion of the lizard's head in clean image (406) is missing from the denoised image 410 and does not have a sharp border in denoised image 408. While image 410 shows a missing portion, in certain cases, prior techniques may add detail that does not exist in the image. Further, skin regions underneath the eye and above the torso lack fine detail in denoised images 408 and 410.

Fig. 4A further depicts a denoised image (412) obtained by applying the spatially-variant noise removal techniques described herein with reference to Figs. 2 and 3. As can be seen, the denoised image includes fine details, e.g., correctly depicts the head portion, and depicts the skin regions underneath the eye. It can be seen that spatially-variant noise removal techniques described herein are able to recover textures in the image even when such textures are hard to distinguish in the noisy input image. As can be seen, the described techniques yield clean images of higher fidelity, while reducing the runtime (and thereby, computational cost) (e.g., of the diffusion process) by orders of magnitude (25 time steps vs. 1,000 steps)

Fig. 4B depicts noise image (404) and denoised image (412) of Fig. 4A, and an intermediate denoised image (420) obtained after 15 time steps. Traditional diffusion techniques (e.g., that generated image 410) start from a complete noise image, rather than the noisy input image, and therefore, utilize substantially more computational resources (e.g., since the diffusion process in this example runs for 1,000 steps to obtain the denoised image 410. In contrast, the spatially-variant noise removal techniques described herein initiate the diffusion process from the noise image (404) and can generate denoised images with lower computational cost. As can be seen in Fig. 4B, after 15 time steps in the diffusion process, the spatially-variant noise removal techniques generate a denoised image (420) that is a significant improvement over the noisy input image (404).

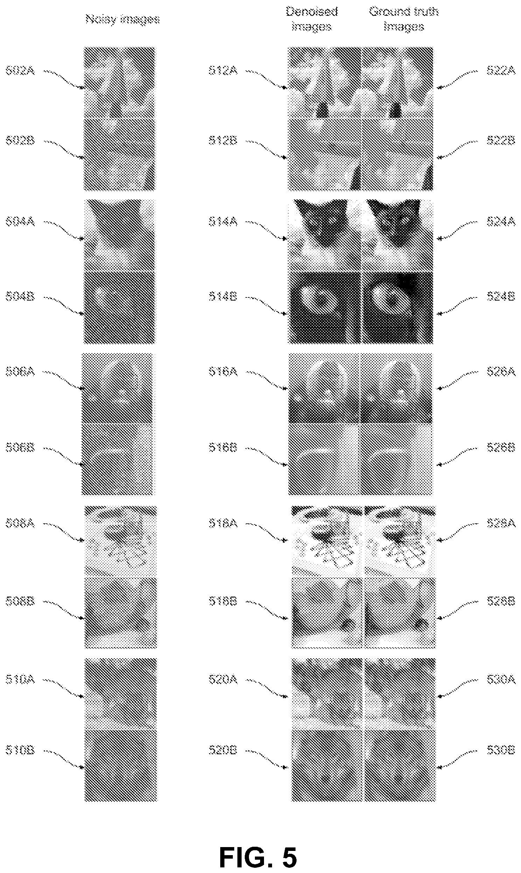

Fig. 5 illustrates several examples of noisy images (502A-510A) with corresponding denoised images (512A-520A) and ground truth images (522A-530A). Fig. 5 also illustrates a close-up (zoomed in) view (502B-510B) of a portion of each noisy image (indicated by a small square in the image), and a corresponding portion of the denoised image (512B-520B) and the ground truth image (522B-530B). As can be seen from Fig. 5, the described techniques are able to achieve high signal fidelity (matching the ground truth image) without a significant distribution drift. In the example illustrated in Fig. 4, the noise gain is 16. Gain refers to amplification of the signal from the camera sensor (ISO) when capturing the image. When the image capture conditions are poor, the gain is higher, implying higher magnitude of noise in the image. Even at the relatively high noise level, the spatially-variant noise removal techniques described herein can generate a denoised image that includes fine high frequency details, while also eliminating a substantial amount of noise. Further, the techniques bear high fidelity to the ground truth image, unlike other diffusion based methods that exhibit hallucinations (adding detail in the denoised image that is absent from the ground truth image).

The described techniques produce more realistic images while also removing high amounts of noise removal. The techniques retain fidelity to the underlying signal (in the noisy image). Further, diffusion techniques that start from complete noise have a fixed computational cost (runtime) based on the number of time steps to reach a denoised image. The computational cost is independent of the noise level in the noisy input image. In contrast, the computational cost (runtime) for the techniques described herein varies based on the noise level in the noisy input image (higher noise requires more cost). Also, since the described techniques can initiate the diffusion process from the noisy input image, the computational cost can be substantially (e.g., orders of magnitude) lower than diffusion techniques that start from complete noise.

Fig. 6 is a flow diagram illustrating an example method 600 to train a machine learning model to denoise a noisy input image, according to some implementations. In some implementations, method 600 can be implemented, for example, on a server system 102 as shown in Fig. 1. In some implementations, some or all of the method 600 can be implemented on one or more client devices 120, 122, 124, or 126 as shown in Fig. 1, one or more server devices, and/or on both server device(s) and client device(s). In described examples, the implementing system includes one or more digital processors or processing circuitry ("processors"), and one or more storage devices (e.g., a database 106 or other storage). In some implementations, different components of one or more servers and/or clients can perform different blocks or other parts of the method 600. In some examples, a first device is described as performing blocks of method 600. Some implementations can have one or more blocks of method 600 performed by one or more other devices (e.g., other client devices or server devices) that can send results or data to the first device.

In some implementations, the method 600, or portions of the method, can be initiated automatically by a system. In some implementations, the implementing system is a first device. For example, the method (or portions thereof) can be periodically performed, or performed based on one or more particular events or conditions, e.g., new or additional training data becoming available, change in or new types of image capture hardware (e.g., that can influence noise in the captured image), a predetermined time period having expired since the last performance of method 600, and/or one or more other conditions occurring which can be specified in settings read by the method.

Training data, e.g., one or more of groundtruth images, noisy input images, etc. is obtained with specific user permission. In some implementations, training data may include images captured specifically for the purpose of training a machine learning model. In some implementations, training data may include synthetic or generated images, e.g., generated using generative artificial intelligence or other suitable image generation techniques. If the training data includes user-provided images, such images are only utilized with specific user permission (for training a machine learning model to perform noise removal) and for the specific purpose. Users are provided with options to exclude their captured images from the training data.

At block 602, a clean image is obtained. For example, the clean image may be an image captured by a camera, such that the image has little or no noise (e.g., in good lighting conditions). In some implementations, the clean image may be obtained from training data that includes a large number of training images, e.g., that are representative of real-world images. Block 602 may be followed by block 604.

At block 604, a noisy input image is generated by adding noise to the clean image. The noise to be added may be determined based on a per-pixel standard deviation of noise (σₚ). In some implementations, the standard deviation of noise (σₚ) is a combination of a read-noise (σᵣ) and a shot-noise (σₛ), wherein the read-noise is a standard deviation for signal-independent noise and the shot-noise is a standard deviation for signal-dependent noise. In some implementations, the read-noise and the shot-noise are randomly selected. Block 604 may be followed by block 606.

At block 606, a timemap (T*) is determined based on the noisy input image and the noise in the noisy input image. The timemap is spatially-varying such that a respective timestep value is associated with each pixel of the noisy input image, such that at least two pixels have different timestep values. Block 606 may be followed by block 608.

At block 608, a new timemap (t_hat) is generated such that a respective timestep value for pixels in the new timemap is lower than the timestep value for the corresponding pixels in the timemap. For example, the new timemap may be generated by subtracting a scalar from a respective timestep value for each pixel in the timemap (T*). The scalar may be selected, e.g., randomly, to as a value between zero and a maximum timestep value in the timemap (T*). Block 608 may be followed by block 610.

At block 610, a current timestep image (x_{t_hat}) is generated based on the new timemap, e.g., noise levels from the new timemap. The current timestep image is generated such that it has lower noise than the noisy input image (y). In other words, the current timestep image is a slightly denoised version of the noisy input image (y). In some implementations, the current timestep image is generated such that it has a noise distribution similar to a noise distribution of the noisy input image. Block 610 may be followed by block 612.

In the diffusion technique, the timestep is linear with the number of forward diffusion steps which is linear in noise variance. In such cases, determining the timestep is equivalent to determining the noise level and can be performed once at the beginning of the inference. During training, since per-pixel noise variance is known, it can be used to directly compute the timestep, or assess the timestep from the image. This is advantageous since it is similar to the inference process.

At block 612, the noisy input image (y), the current timestep image (x_{t_hat}), and the new timemap are provided as input to a machine learning model that is being trained. The machine learning model generates a denoised image (x_{0_hat}). Block 612 may be followed by block 614.

At block 614, a loss value is calculated based on a comparison of the denoised image (x_{0_hat}) generated by the machine learning model and the clean image (x₀). The loss value is indicative of the difference between the clean image (which is the groundtruth) and the denoised image generated by the machine learning model being trained. Block 614 may be followed by block 616.

At block 616, one or more parameters of the machine learning model are updated based on the loss value. In some implementations, the machine learning model may include a neural network. In these examples, updating the one or more parameters of the machine learning model based on the loss value includes performing backpropagation to adjust weights of one or more nodes of the neural network such that the loss value is reduced. Block 616 may be followed by block 618.

At block 618, it is determined if a stopping criterion has been met. In some implementations, the stopping criterion may include one or more of: a computational budget for training being exhausted, all clean images in a training dataset of clean images having been utilized, or when a change in parameter values of at least one of the one or more parameters between successive iterations falls below a threshold. If the stopping criterion has not been met, block 618 may be followed by block 602. If the stopping criterion has been met, block 618 is followed by block 620.

At block 620, a machine-learned model (trained model, which is a version of the machine learning model that is output after the parameter adjustment). The machine-learned model may be utilized to perform spatially variant noise removal from any image. For example, the machine-learned model may be utilized for noise removal using the methods described with reference to Figs. 2 and 3.

Various blocks of method 600 may be combined, split into multiple blocks, or be performed in parallel. For example, blocks 604-616 may be performed multiple times for the same clean image, e.g., to generate different noisy versions of the clean image at each execution of block 604 and train the model using each of the generated noisy versions. In some implementations, blocks 608-616 may be performed multiple times for the same noisy input image by using a different scalar value (e.g., that may be randomly sampled between 0 and the maximum value in the timemap) to generate the new timemap at block 608, and use the corresponding estimated denoised image to determine a loss value. During training, a task for the model is to assess the clean image x_0 given the timemap. In some implementations, method 600 may be performed in parallel with multiple images, or portions of method 600 (e.g., blocks 604-614 or 604-616 for the same clean image; blocks 608-614 or 608-616 for the same noisy input image; etc.). Method 600, or portions thereof, may be repeated any number of times using additional inputs, e.g., new training images received after an initial machine-learned model was obtained at block 620. For example, performing model retraining may improve the quality of denoised images generated by the machine-learned model. During model training, images of different image sizes and/or different levels of noise can be used.

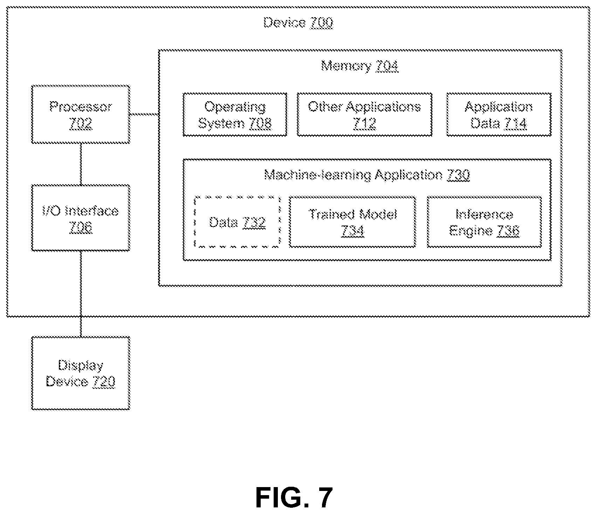

Fig. 7 is a block diagram of an example device 700 which may be used to implement one or more features described herein. In one example, device 700 may be used to implement a client device, e.g., any of client devices 115 shown in Fig. 1. Alternatively, device 700 can implement a server device, e.g., server 101. In some implementations, device 700 may be used to implement a client device, a server device, or both client and server devices. Device 700 can be any suitable computer system, server, or other electronic or hardware device as described above.

One or more methods described herein can be run in a standalone program that can be executed on any type of computing device, a program run on a web browser, a mobile application ("app") run on a mobile computing device (e.g., cell phone, smart phone, tablet computer, wearable device (wristwatch, armband, jewelry, headwear, virtual reality goggles or glasses, augmented reality goggles or glasses, head mounted display, etc.), laptop computer, etc.). In one example, a client/server architecture can be used, e.g., a mobile computing device (as a client device) sends user input data to a server device and receives from the server the final output data for output (e.g., for display). In another example, all computations can be performed within the mobile app (and/or other apps) on the mobile computing device. In another example, computations can be split between the mobile computing device and one or more server devices.

In some implementations, device 700 includes a processor 702, a memory 704, and input/output (I/O) interface 706. Processor 702 can be one or more processors and/or processing circuits to execute program code and control basic operations of the device 700. A "processor" includes any suitable hardware system, mechanism or component that processes data, signals or other information. A processor may include a system with a general-purpose central processing unit (CPU) with one or more cores (e.g., in a single-core, dual-core, or multicore configuration), multiple processing units (e.g., in a multiprocessor configuration), a graphics processing unit (GPU), a field-programmable gate array (FPGA), an application-specific integrated circuit (ASIC), a complex programmable logic device (CPLD), dedicated circuitry for achieving functionality, a special-purpose processor to implement neural network model-based processing, neural circuits, processors optimized for matrix computations (e.g., matrix multiplication), or other systems. In some implementations, processor 702 may include one or more co-processors that implement neural-network processing. In some implementations, processor 702 may be a processor that processes data to produce probabilistic output, e.g., the output produced by processor 702 may be imprecise or may be accurate within a range from an expected output. Processing need not be limited to a particular geographic location, or have temporal limitations. For example, a processor may perform its functions in "real-time," "offline," in a "batch mode," etc. Portions of processing may be performed at different times and at different locations, by different (or the same) processing systems. A computer may be any processor in communication with a memory.

Memory 704 is typically provided in device 700 for access by the processor 702, and may be any suitable processor-readable storage medium, such as random access memory (RAM), read-only memory (ROM), Electrical Erasable Read-only Memory (EEPROM), Flash memory, etc., suitable for storing instructions for execution by the processor, and located separate from processor 702 and/or integrated therewith. Memory 704 can store software operating on the server device 700 by the processor 702, including an operating system 708, machine-learning application 730, other applications 712, and application data 714. Other applications 712 may include applications such as a data display engine, web hosting engine, image display engine, notification engine, social networking engine, etc. In some implementations, the machine-learning application 730 and other applications 712 can each include instructions that enable processor 702 to perform functions described herein, e.g., some or all of the method of Figs. 2, 3, and/or 6.

Other applications 712 can include, e.g., image editing applications, media display applications, communication applications, web hosting engines or applications, mapping applications, media sharing applications, etc. One or more methods disclosed herein can operate in several environments and platforms, e.g., as a stand-alone computer program that can run on any type of computing device, as a web application having web pages, as a mobile application ("app") run on a mobile computing device, etc.

In various implementations, machine-learning application may utilize Bayesian classifiers, support vector machines, neural networks, or other learning techniques. In some implementations, machine-learning application 730 may include a machine-learned model (trained model) 734, an inference engine 736, and data 732. In some implementations, data 732 may include training data, e.g., data used to generate trained model 734. For example, training data may include any type of data such as text, images, audio, video, etc. When trained model 734 is an image denoising model, training data may include groundtruth clean images.

Training data may be obtained from any source, e.g., a data repository specifically marked for training, data for which permission is provided for use as training data for machine-learning, etc. In implementations where one or more users permit use of their respective user data to train a machine-learning model, e.g., trained model 734, training data may include such user data. In implementations where users permit use of their respective user data, data 732 may include permitted data such as images (e.g., photos or other user-generated images).

In some implementations, training data may include synthetic data generated for the purpose of training, such as data that is not based on user input or activity in the context that is being trained, e.g., data generated from simulated photographs or other computer-generated images. In some implementations, machine-learning application 730 excludes data 732. For example, in these implementations, the trained model 734 may be generated, e.g., on a different device, and be provided as part of machine-learning application 730. In various implementations, the trained model 734 may be provided as a data file that includes a model structure or form, and associated weights. Inference engine 736 may read the data file for trained model 734 and implement a neural network with node connectivity, layers, and weights based on the model structure or form specified in trained model 734.

In some implementations, the trained model 734 may include one or more model forms or structures. For example, model forms or structures can include any type of neural-network, such as a linear network, a deep neural network that implements a plurality of layers (e.g., "hidden layers" between an input layer and an output layer, with each layer being a linear network), a convolutional neural network (e.g., a network that splits or partitions input data into multiple parts or tiles, processes each tile separately using one or more neural-network layers, and aggregates the results from the processing of each tile), a sequence-to-sequence neural network (e.g., a network that takes as input sequential data, such as words in a sentence, frames in a video, etc. and produces as output a result sequence), etc. The model form or structure may specify connectivity between various nodes and organization of nodes into layers.

For example, the nodes of a first layer (e.g., input layer) may receive data as input data 732 or application data 714. For example, when trained model 734 is an image denoising model, the input data may include clean images. Such data can include, for example, one or more pixels per node, e.g., when the trained model is used for image analysis or image generation. Subsequent intermediate layers may receive as input output of nodes of a previous layer per the connectivity specified in the model form or structure. These layers may also be referred to as hidden layers or latent layers.

A final layer (e.g., output layer) produces an output of the machine-learning application. For example, the output may be a denoised image. In some implementations, model form or structure also specifies a number and/ or type of nodes in each layer.

In different implementations, trained model 734 can include a plurality of nodes, arranged into layers per the model structure or form. In some implementations, the nodes may be computational nodes with no memory, e.g., configured to process one unit of input to produce one unit of output. Computation performed by a node may include, for example, multiplying each of a plurality of node inputs by a weight, obtaining a weighted sum, and adjusting the weighted sum with a bias or intercept value to produce the node output. In some implementations, the computation performed by a node may also include applying a step/activation function to the adjusted weighted sum. In some implementations, the step/activation function may be a nonlinear function. In various implementations, such computation may include operations such as matrix multiplication. In some implementations, computations by the plurality of nodes may be performed in parallel, e.g., using multiple processors cores of a multicore processor, using individual processing units of a GPU, or special-purpose neural circuitry. In some implementations, nodes may include memory, e.g., may be able to store and use one or more earlier inputs in processing a subsequent input. For example, nodes with memory may include long short-term memory (LSTM) nodes. LSTM nodes may use the memory to maintain "state" that permits the node to act like a finite state machine (FSM). Models with such nodes may be useful in processing sequential data, e.g., words in a sentence or a paragraph, frames in a video, speech or other audio, etc. In some implementations, a model with an attention mechanism and transformer networks may be used.

In some implementations, trained model 734 may include embeddings or weights for individual nodes. For example, a model may be initiated as a plurality of nodes organized into layers as specified by the model form or structure. At initialization, a respective weight may be applied to a connection between each pair of nodes that are connected per the model form, e.g., nodes in successive layers of the neural network. For example, the respective weights may be randomly assigned, or initialized to default values. The model may then be trained, e.g., using data 732, to produce a result.

For example, training may include applying supervised learning techniques. In supervised learning, the training data can include a plurality of inputs (e.g., a set of noisy input images) and a corresponding expected output for each input (e.g., a set of groundtruth clean images corresponding to the noisy input images). Based on a comparison of the output of the model with the expected output, values of the weights are automatically adjusted, e.g., in a manner that increases a probability that the model produces the expected output when provided similar input.

In some implementations, training may include applying unsupervised learning techniques. In unsupervised learning, only input data may be provided and the model may be trained to differentiate data, e.g., to cluster input data into a plurality of groups, where each group includes input data that are similar in some manner.

In some implementations, unsupervised learning may be used to produce knowledge representations, e.g., that may be used by machine-learning application 730. In various implementations, a trained model includes a set of weights, or embeddings, corresponding to the model structure. In implementations where data 732 is omitted, machine-learning application 730 may include trained model 734 that is based on prior training, e.g., by a developer of the machine-learning application 730, by a third-party, etc. In some implementations, trained model 734 may include a set of weights that are fixed, e.g., downloaded from a server that provides the weights.

Machine-learning application 730 also includes an inference engine 736. Inference engine 736 is configured to apply the trained model 734 to data, such as application data 714, to provide an inference. In some implementations, inference engine 736 may include software code to be executed by processor 702. In some implementations, inference engine 736 may specify circuit configuration (e.g., for a programmable processor, for a field programmable gate array (FPGA), etc.) enabling processor 702 to apply the trained model. In some implementations, inference engine 736 may include software instructions, hardware instructions, or a combination. In some implementations, inference engine 736 may offer an application programming interface (API) that can be used by operating system 708 and/or other applications 712 to invoke inference engine 736, e.g., to apply trained model 734 to application data 714 to generate an inference. For example, the inference for an image denoising model may be a noisy image, while inference is a denoised image, as described above with reference to Figs. 2-6.

Machine-learning application 730 may provide several technical advantages. For example, when trained model 734 is generated based on unsupervised learning, trained model 734 can be applied by inference engine 736 to produce knowledge representations (e.g., numeric representations) from input data, e.g., application data 714. For example, a model trained for image analysis may produce representations of images that have a smaller data size (e.g., 1 KB) than input images (e.g., 10 MB). In some implementations, such representations may be helpful to reduce processing cost (e.g., computational cost, memory usage, etc.) to generate an output (e.g., a label, a classification, a sentence descriptive of the image, a denoised image from a noisy image, etc.).

In some implementations, such representations may be provided as input to a different machine-learning application that produces output from the output of inference engine 736. In some implementations, knowledge representations generated by machine-learning application 730 may be provided to a different device that conducts further processing, e.g., over a network. In such implementations, providing the knowledge representations rather than the images may provide a technical benefit, e.g., enable faster data transmission with reduced cost.

In some implementations, machine-learning application 730 may be implemented in an offline manner. In these implementations, trained model 734 may be generated in a first stage, and provided as part of machine-learning application 730. In some implementations, machine-learning application 730 may be implemented in an online manner. For example, in such implementations, an application that invokes machine-learning application 730 (e.g., operating system 708, one or more of other applications 712) may utilize an inference produced by machine-learning application 730, e.g., provide the inference to a user, and may generate system logs (e.g., if permitted by the user, an action taken by the user based on the inference; or if utilized as input for further processing, a result of the further processing). System logs may be produced periodically, e.g., hourly, monthly, quarterly, etc. and may be used, with user permission, to update trained model 734, e.g., to update embeddings for trained model 734.

In some implementations, machine-learning application 730 may be implemented in a manner that can adapt to particular configuration of device 700 on which the machine-learning application 730 is executed. For example, machine-learning application 730 may determine a computational graph that utilizes available computational resources, e.g., processor 702. For example, if machine-learning application 730 is implemented as a distributed application on multiple devices, machine-learning application 730 may determine computations to be carried out on individual devices in a manner that optimizes computation. In another example, machine-learning application 730 may determine that processor 702 includes a GPU with a particular number of GPU cores (e.g., 1000) and implement the inference engine accordingly (e.g., as 1000 individual processes or threads).

In some implementations, machine-learning application 730 may implement an ensemble of trained models. For example, trained model 734 may include a plurality of trained models that are each applicable to same input data. In these implementations, machine-learning application 730 may choose a particular trained model, e.g., based on available computational resources, success rate with prior inferences, etc. In some implementations, machine-learning application 730 may execute inference engine 736 such that a plurality of trained models is applied. In these implementations, machine-learning application 730 may combine outputs from applying individual models, e.g., using a voting-technique that scores individual outputs from applying each trained model, or by choosing one or more particular outputs. Further, in these implementations, machine-learning application may apply a time threshold for applying individual trained models (e.g., 0.5 ms) and utilize only those individual outputs that are available within the time threshold. Outputs that are not received within the time threshold may not be utilized, e.g., discarded. For example, such approaches may be suitable when there is a time limit specified while invoking the machine-learning application, e.g., by operating system 708 or one or more applications 712.

In different implementations, machine-learning application 730 can produce different types of outputs. For example, machine-learning application 730 can provide representations or clusters (e.g., numeric representations of input data), labels (e.g., for input data that includes images, documents, etc.), phrases or sentences (e.g., descriptive of an image or video, suitable for use as a response to an input sentence, etc.), images (e.g., denoised images generated by the machine-learning application in response to input images, e.g., noisy images), audio or video (e.g., in response to an input video, machine-learning application 730 may produce an output video with a particular effect applied, e.g., rendered in a comic-book or particular artist's style, when trained model 734 is trained using training data from the comic book or particular artist, etc. In some implementations, machine-learning application 730 may produce an output based on a format specified by an invoking application, e.g., operating system 708 or one or more applications 712. In some implementations, an invoking application may be another machine-learning application. For example, such configurations may be used in generative adversarial networks, where an invoking machine-learning application is trained using output from machine-learning application 730 and vice-versa.

Any of software in memory 704 can alternatively be stored on any other suitable storage location or computer-readable medium. In addition, memory 704 (and/or other connected storage device(s)) can store one or more messages, one or more taxonomies, electronic encyclopedia, dictionaries, thesauruses, knowledge bases, message data, grammars, user preferences, and/or other instructions and data used in the features described herein. Memory 704 and any other type of storage (magnetic disk, optical disk, magnetic tape, or other tangible media) can be considered "storage" or "storage devices."

I/O interface 706 can provide functions to enable interfacing the server device 700 with other systems and devices. Interfaced devices can be included as part of the device 700 or can be separate and communicate with the device 700. For example, network communication devices, storage devices (e.g., memory and/or database 106), and input/output devices can communicate via I/O interface 706. In some implementations, the I/O interface can connect to interface devices such as input devices (keyboard, pointing device, touchscreen, microphone, camera, scanner, sensors, etc.) and/or output devices (display devices, speaker devices, printers, motors, etc.).

Some examples of interfaced devices that can connect to I/O interface 706 can include one or more display devices 720 that can be used to display content, e.g., images, video, and/or a user interface of an output application as described herein. Display device 720 can be connected to device 700 via local connections (e.g., display bus) and/or via networked connections and can be any suitable display device. Display device 720 can include any suitable display device such as an LCD, LED, or plasma display screen, CRT, television, monitor, touchscreen, 3-D display screen, or other visual display device. For example, display device 720 can be a flat display screen provided on a mobile device, multiple display screens provided in a goggles or headset device, or a monitor screen for a computer device.

The I/O interface 706 can interface to other input and output devices. Some examples include one or more cameras which can capture images. Some implementations can provide a microphone for capturing sound (e.g., as a part of captured images, voice commands, etc.), audio speaker devices for outputting sound, or other input and output devices.

For ease of illustration, Fig. 7 shows one block for each of processor 702, memory 704, I/O interface 706, and software blocks 708, 712, and 730. These blocks may represent one or more processors or processing circuitries, operating systems, memories, I/O interfaces, applications, and/or software modules. In other implementations, device 700 may not have all of the components shown and/or may have other elements including other types of elements instead of, or in addition to, those shown herein. While some components are described as performing blocks and operations as described in some implementations herein, any suitable component or combination of components of environment 100, device 700, similar systems, or any suitable processor or processors associated with such a system, may perform the blocks and operations described.

Methods described herein can be implemented by computer program instructions or code, which can be executed on a computer. For example, the code can be implemented by one or more digital processors (e.g., microprocessors or other processing circuitry) and can be stored on a computer program product including a non-transitory computer readable medium (e.g., storage medium), such as a magnetic, optical, electromagnetic, or semiconductor storage medium, including semiconductor or solid state memory, magnetic tape, a removable computer diskette, a random access memory (RAM), a read-only memory (ROM), flash memory, a rigid magnetic disk, an optical disk, a solid-state memory drive, etc. The program instructions can also be contained in, and provided as, an electronic signal, for example in the form of software as a service (SaaS) delivered from a server (e.g., a distributed system and/or a cloud computing system). Alternatively, one or more methods can be implemented in hardware (logic gates, etc.), or in a combination of hardware and software. Example hardware can be programmable processors (e.g., Field-Programmable Gate Array (FPGA), Complex Programmable Logic Device), general purpose processors, graphics processors, Application Specific Integrated Circuits (ASICs), and the like. One or more methods can be performed as part of or component of an application running on the system, or as an application or software running in conjunction with other applications and operating system.

Although the description has been described with respect to particular implementations thereof, these particular implementations are merely illustrative, and not restrictive. Concepts illustrated in the examples may be applied to other examples and implementations.

In situations in which certain implementations discussed herein may collect or use personal information about users (e.g., user data, information about a user's social network, user's location and time at the location, user's biometric information, user's activities and demographic information), users are provided with one or more opportunities to control whether information is collected, whether the personal information is stored, whether the personal information is used, and how the information is collected about the user, stored and used. That is, the systems and methods discussed herein collect, store and/or use user personal information specifically upon receiving explicit authorization from the relevant users to do so. For example, a user is provided with control over whether programs or features collect user information about that particular user or other users relevant to the program or feature. Each user for which personal information is to be collected is presented with one or more options to allow control over the information collection relevant to that user, to provide permission or authorization as to whether the information is collected and as to which portions of the information are to be collected. For example, users can be provided with one or more such control options over a communication network. In addition, certain data may be treated in one or more ways before it is stored or used so that personally identifiable information is removed. As one example, a user's identity may be treated so that no personally identifiable information can be determined. As another example, a user device's geographic location may be generalized to a larger region so that the user's particular location cannot be determined.

Note that the functional blocks, operations, features, methods, devices, and systems described in the present disclosure may be integrated or divided into different combinations of systems, devices, and functional blocks as would be known to those skilled in the art. Any suitable programming language and programming techniques may be used to implement the routines of particular implementations. Different programming techniques may be employed, e.g., procedural or object-oriented. The routines may execute on a single processing device or multiple processors. Although the steps, operations, or computations may be presented in a specific order, the order may be changed in different particular implementations. In some implementations, multiple steps or operations shown as sequential in this specification may be performed at the same time.

## Claims

1. A computer-implemented method to denoise a noisy input image, the method comprising:
obtaining (212) the noisy input image, the noisy input image including a plurality of pixels;
estimating (214) a timemap based on the noisy input image and noise in the noisy input image, wherein the timemap is spatially-varying such that a respective timestep value is associated with each pixel of the noisy input image and wherein at least two pixels have different timestep values;
performing (216) a diffusion process on the noisy input image, wherein the diffusion process is performed over two or more timesteps beginning at a highest value in the timemap, wherein at each timestep:
estimating (302), using a machine-learned model (SVNR), a denoised image based on the noisy input image, a current timestep image, and the timestep;
obtaining (304) a next timestep image based on the denoised image and the current timestep image;
for each pixel, if the timestep is greater than or equal to the timestep value associated with the pixel, updating (316) the next timestep image with a corresponding value from the denoised image;
after the updating, setting (308) the next timestep image as the current timestep image; and
decrementing (310) the timestep,
wherein the estimating, obtaining, updating, setting, and decrementing are repeated while the timestep is positive (312); and
outputting (218) the denoised image.

2. The computer-implemented method of claim 1, further comprising determining the noise in the noisy input image.

3. The computer-implemented method of claim 2, wherein each pixel has a respective noise level, and wherein determining the noise comprises determining a read-noise and a shot-noise from the noisy input image, wherein the read-noise is a standard deviation for signal-independent noise and the shot-noise is a standard deviation for signal-dependent noise.

4. The computer-implemented method of claim 3, wherein the timemap encodes spatially varying noise for the noisy input image.

5. The computer-implemented method of claim 1, wherein at a first timestep while performing the diffusion process, the noisy input image is used as the current timestep image.

6. The computer-implemented method of claim 1, wherein the noisy input image acts as a condition image during the diffusion process.

7. A computing device comprising:
a processor; and
a memory coupled to the processor with instructions stored thereon that, when executed by the processor, cause the processor to perform steps of the method according to any one of the preceding claims.

8. A computer-implemented method to train a machine learning model to denoise a noisy input image, the method comprising:
obtaining (602) a clean image;
generating (604) a noisy input image by adding noise to the clean image, wherein the noise is determined based on a per-pixel standard deviation of noise;
estimating (606) a timemap based on the noisy input image and the noise in the noisy input image, wherein the timemap is spatially-varying such that a respective timestep value is associated with each pixel of the noisy input image, wherein at least two pixels have different timestep values;
generating (608) a new timemap, wherein a respective timestep value for pixels in the new timemap is lower than the timestep values for the corresponding pixels in the timemap;
generating (610) a current timestep image based on the new timemap, wherein the current timestep image has lower noise than the noisy input image;
estimating (612), using the machine learning model, a denoised image based on the noisy input image, the current timestep image, and the new timemap;
calculating (614) a loss value based on a comparison of the denoised image and the clean image; and
updating (616) one or more parameters of the machine learning model based on the loss value.

9. The computer-implemented method of claim 8, wherein the standard deviation of noise is a combination of a read-noise and a shot-noise, wherein the read-noise is a standard deviation for signal-independent noise and the shot-noise is a standard deviation for signal-dependent noise, wherein the read-noise and the shot-noise are randomly selected.

10. The computer-implemented method of claim 8, wherein generating the new timemap comprises subtracting a scalar from a respective timestep value for each pixel in the timemap, wherein the scalar has a value between zero and a maximum timestep value in the timemap.

11. The computer-implemented method of claim 8, wherein generating the current timestep image based on the new timemap, comprises sampling noise based on the new timemap.

12. The computer-implemented method of claim 11, wherein the current timestep image has a noise distribution similar to a noise distribution of the noisy input image.

13. The computer-implemented method of claim 8, wherein the machine learning model includes a neural network, and wherein updating the one or more parameters of the machine learning model based on the loss value comprises performing backpropagation to adjust weights of one or more nodes of the neural network.

14. The computer-implemented method of claim 8, wherein the obtaining the clean image, generating the noisy input image, estimating the timemap, generating the new timemap, generating the current timestep image, estimating the denoised image, calculating the loss value, and updating the one or more parameters of the machine learning model are performed iteratively until a stopping criterion is met.

15. The computer-implemented method of claim 14, wherein the stopping criterion includes one or more of: a computational budget for training being exhausted or a change in parameter values of at least one of the one or more parameters between successive iterations falling below a threshold.

## Patentansprüche

1. Computerimplementiertes Verfahren zum Entrauschen eines verrauschten Eingabebildes, wobei das Verfahren Folgendes umfasst:
Erlangen (212) des verrauschten Eingabebildes, wobei das verrauschte Eingabebild eine Vielzahl von Pixeln umfasst;
Schätzen (214) einer Zeitübersicht basierend auf dem verrauschten Eingabebild und Rauschen in dem verrauschten Eingabebild, wobei die Zeitübersicht derart räumlich variiert, dass jedem Pixel des verrauschten Eingabebildes ein jeweiliger Zeitschrittwert zugeordnet ist und wobei mindestens zwei Pixel unterschiedliche Zeitschrittwerte aufweisen;
Durchführen (216) eines Diffusionsvorgangs an dem verrauschten Eingabebild, wobei der Diffusionsvorgang über zwei oder mehr Zeitschritte durchgeführt wird, die bei einem höchsten Wert in der Zeitübersicht beginnen, wobei bei jedem Zeitschritt Folgendes erfolgt:
Schätzen (302), unter Verwendung eines maschinell gelernten Modells (SVNR), eines entrauschten Bildes basierend auf dem verrauschten Eingabebild, einem aktuellen Zeitschrittbild und dem Zeitschritt;
Erlangen (304) eines nächsten Zeitschrittbildes basierend auf dem entrauschten Bild und dem aktuellen Zeitschrittbild;
für jedes Pixel, wenn der Zeitschritt größer als oder gleich dem Zeitschrittwert ist, der dem Pixel zugeordnet ist, Aktualisieren (316) des nächsten Zeitschrittbildes mit einem entsprechenden Wert aus dem entrauschten Bild;
nach dem Aktualisieren, Festlegen (308) des nächsten Zeitschrittbildes als das aktuelle Zeitschrittbild; und
Dekrementieren (310) des Zeitschritts,
wobei das Schätzen, Erlangen, Aktualisieren, Festlegen und Dekrementieren wiederholt werden, während der Zeitschritt positiv (312) ist; und
Ausgeben (218) des entrauschten Bildes.

2. Computerimplementiertes Verfahren nach Anspruch 1, ferner umfassend Bestimmen des Rauschens in dem verrauschten Eingabebild.

3. Computerimplementiertes Verfahren nach Anspruch 2, wobei jedes Pixel einen jeweiligen Rauschpegel aufweist, und wobei das Bestimmen des Rauschens Bestimmen eines Ausleserauschens und eines Schrotrauschens anhand des verrauschten Eingabebildes umfasst, wobei das Ausleserauschen eine Standardabweichung für signalunabhängiges Rauschen ist und das Schrotrauschen eine Standardabweichung für signalabhängiges Rauschen ist.

4. Computerimplementiertes Verfahren nach Anspruch 3, wobei die Zeitübersicht räumlich variierendes Rauschen für das verrauschte Eingabebild codiert.

5. Computerimplementiertes Verfahren nach Anspruch 1, wobei zu einem ersten Zeitschritt, während der Diffusionsvorgang durchgeführt wird, das verrauschte Eingabebild als das aktuelle Zeitschrittbild verwendet wird.

6. Computerimplementiertes Verfahren nach Anspruch 1, wobei das verrauschte Eingabebild während des Diffusionsvorgangs als ein Bedingungsbild dient.

7. Rechenvorrichtung, umfassend:
einen Prozessor; und
einen Speicher, der mit dem Prozessor gekoppelt ist, mit darauf gespeicherten Anweisungen, die, wenn sie von dem Prozessor ausgeführt werden, den Prozessor veranlassen, Schritte des Verfahrens nach einem der vorhergehenden Ansprüche durchzuführen.

8. Computerimplementiertes Verfahren zum Trainieren eines Modells für maschinelles Lernen zum Entrauschen eines verrauschten Eingabebildes, wobei das Verfahren Folgendes umfasst:
Erlangen (602) eines sauberen Bildes;
Erzeugen (604) eines verrauschten Eingabebildes durch Hinzufügen von Rauschen zu dem sauberen Bild, wobei das Rauschen basierend auf einer Standardabweichung des Rauschens pro Pixel bestimmt wird;
Schätzen (606) einer Zeitübersicht basierend auf dem verrauschten Eingabebild und dem Rauschen in dem verrauschten Eingabebild, wobei die Zeitübersicht derart räumlich variiert, dass jedem Pixel des verrauschten Eingabebildes ein jeweiliger Zeitschrittwert zugeordnet ist, wobei mindestens zwei Pixel unterschiedliche Zeitschrittwerte aufweisen;
Erzeugen (608) einer neuen Zeitübersicht, wobei ein jeweiliger Zeitschrittwert für Pixel in der neuen Zeitübersicht geringer ist als die Zeitschrittwerte für die entsprechenden Pixel in der Zeitübersicht;
Erzeugen (610) eines aktuellen Zeitschrittbildes basierend auf der neuen Zeitübersicht, wobei das aktuelle Zeitschrittbild ein geringeres Rauschen aufweist als das verrauschte Eingabebild;
Schätzen (612), unter Verwendung des Modells für maschinelles Lernen, eines entrauschten Bildes basierend auf dem verrauschten Eingabebild, dem aktuellen Zeitschrittbild und der neuen Zeitübersicht;
Berechnen (614) eines Verlustwerts basierend auf einem Vergleich des entrauschten Bildes und des sauberen Bildes; und
Aktualisieren (616) eines oder mehrerer Parameter des Modells für maschinelles Lernen basierend auf dem Verlustwert.

9. Computerimplementiertes Verfahren nach Anspruch 8, wobei die Standardabweichung des Rauschens eine Kombination aus einem Ausleserauschen und einem Schrotrauschen ist, wobei das Ausleserauschen eine Standardabweichung für signalunabhängiges Rauschen ist und das Schrotrauschen eine Standardabweichung für signalabhängiges Rauschen ist, wobei das Ausleserauschen und das Schrotrauschen zufällig ausgewählt sind.

10. Computerimplementiertes Verfahren nach Anspruch 8, wobei das Erzeugen der neuen Zeitübersicht Subtrahieren eines Skalars von einem jeweiligen Zeitschrittwert für jedes Pixel in der Zeitübersicht umfasst, wobei der Skalar einen Wert zwischen Null und einem maximalen Zeitschrittwert in der Zeitübersicht aufweist.

11. Computerimplementiertes Verfahren nach Anspruch 8, wobei das Erzeugen des aktuellen Zeitschrittbildes basierend auf der neuen Zeitübersicht Abtasten des Rauschens basierend auf der neuen Zeitübersicht umfasst.

12. Computerimplementiertes Verfahren nach Anspruch 11, wobei das aktuelle Zeitschrittbild eine Rauschverteilung ähnlich einer Rauschverteilung des verrauschten Eingabebildes aufweist.

13. Computerimplementiertes Verfahren nach Anspruch 8, wobei das Modell für maschinelles Lernen ein neuronales Netzwerk einschließt und wobei das Aktualisieren des einen oder der mehreren Parameter des Modells für maschinelles Lernen basierend auf dem Verlustwert Durchführen einer Rückpropagation umfasst, um Gewichtungen eines oder mehrerer Knoten des neuronalen Netzwerks anzupassen.

14. Computerimplementiertes Verfahren nach Anspruch 8, wobei das Erlangen des sauberen Bildes, das Erzeugen des verrauschten Eingabebildes, das Schätzen der Zeitübersicht, das Erzeugen der neuen Zeitübersicht, das Erzeugen des aktuellen Zeitschrittbildes, das Schätzen des entrauschten Bildes, das Berechnen des Verlustwerts und das Aktualisieren des einen oder der mehreren Parameter des Modells für maschinelles Lernen iterativ durchgeführt werden, bis ein Stoppkriterium erfüllt ist.

15. Computerimplementiertes Verfahren nach Anspruch 14, wobei das Stoppkriterium eines oder mehrere der Folgenden einschließt: ein rechnerisches Budget für das Trainieren ist erschöpft oder eine Änderung der Parameterwerte von mindestens einem des einen oder der mehreren Parameter zwischen aufeinanderfolgenden Iterationen fällt unter einen Schwellenwert.

## Revendications

1. Procédé mis en œuvre par ordinateur de débruitage d'une image d'entrée bruitée, le procédé comprenant :
l'obtention (212) de l'image d'entrée bruitée, l'image d'entrée bruitée comportant une pluralité de pixels ;
l'estimation (214) d'une carte temporelle sur la base de l'image d'entrée bruitée et du bruit dans l'image d'entrée bruitée, dans lequel la carte temporelle varie spatialement de telle sorte qu'une valeur de pas de temps respective est associée à chaque pixel de l'image d'entrée bruitée et dans lequel au moins deux pixels ont des valeurs de pas de temps différentes ;
la réalisation (216) d'un processus de diffusion sur l'image d'entrée bruitée, dans lequel le processus de diffusion est réalisé sur deux ou plusieurs pas de temps commençant à une valeur la plus élevée dans la carte temporelle, dans lequel à chaque pas de temps :
l'estimation (302), à l'aide d'un modèle appris par machine (SVNR), d'une image débruitée sur la base de l'image d'entrée bruitée, d'une image de pas de temps actuelle et du pas de temps ;
l'obtention (304) d'une image de pas de temps suivante sur la base de l'image débruitée et de l'image de pas de temps actuelle ;
pour chaque pixel, si le pas de temps est supérieur ou égal à la valeur de pas de temps associée au pixel, la mise à jour (316) de l'image de pas de temps suivante avec une valeur correspondante de l'image débruitée ;
après la mise à jour, la définition (308) de l'image de pas de temps suivante en tant qu'image de pas de temps actuelle ; et
la décrémentation (310) du pas de temps,
dans lequel l'estimation, l'obtention, la mise à jour, la définition et la décrémentation sont répétées tant que le pas de temps est positif (312) ; et
la délivrance en sortie (218) de l'image débruitée.

2. Procédé mis en œuvre par ordinateur selon la revendication 1, comprenant en outre la détermination du bruit dans l'image d'entrée bruitée.

3. Procédé mis en œuvre par ordinateur selon la revendication 2, dans lequel chaque pixel a un niveau de bruit respectif, et dans lequel la détermination du bruit comprend la détermination d'un bruit de lecture et d'un bruit de grenaille à partir de l'image d'entrée bruitée, dans lequel le bruit de lecture est un écart type pour le bruit indépendant du signal et le bruit de grenaille est un écart type pour le bruit dépendant du signal.

4. Procédé mis en œuvre par ordinateur selon la revendication 3, dans lequel la carte temporelle code un bruit variant spatialement pour l'image d'entrée bruitée.

5. Procédé mis en œuvre par ordinateur selon la revendication 1, dans lequel à un premier pas de temps, lors de la réalisation du processus de diffusion, l'image d'entrée bruitée est utilisée en tant qu'image de pas de temps actuelle.

6. Procédé mis en œuvre par ordinateur selon la revendication 1, dans lequel l'image d'entrée bruitée sert d'image de condition lors du processus de diffusion.

7. Dispositif informatique comprenant :
un processeur ; et
une mémoire couplée au processeur sur laquelle sont stockées des instructions qui, lorsqu'elles sont exécutées par le processeur, amènent le processeur à réaliser des étapes du procédé selon l'une quelconque des revendications précédentes.

8. Procédé mis en œuvre par ordinateur d'entraînement d'un modèle d'apprentissage automatique destiné à débruiter une image d'entrée bruitée, le procédé comprenant :
l'obtention (602) d'une image propre ;
la génération (604) d'une image d'entrée bruitée en ajoutant du bruit à l'image propre, dans lequel le bruit est déterminé sur la base d'un écart type de bruit par pixel ;
l'estimation (606) d'une carte temporelle sur la base de l'image d'entrée bruitée et du bruit dans l'image d'entrée bruitée, dans lequel la carte temporelle varie spatialement de telle sorte qu'une valeur de pas de temps respective est associée à chaque pixel de l'image d'entrée bruitée, dans lequel au moins deux pixels ont des valeurs de pas de temps différentes ;
la génération (608) d'une nouvelle carte temporelle, dans lequel une valeur de pas de temps respective pour les pixels dans la nouvelle carte temporelle est inférieure aux valeurs de pas de temps pour les pixels correspondants dans la carte temporelle ;
la génération (610) d'une image de pas de temps actuelle sur la base de la nouvelle carte temporelle, dans lequel l'image de pas de temps actuelle a un bruit inférieur à celui de l'image d'entrée bruitée ;
l'estimation (612), à l'aide du modèle d'apprentissage automatique, d'une image débruitée sur la base de l'image d'entrée bruitée, de l'image de pas de temps actuelle et de la nouvelle carte temporelle ;
le calcul (614) d'une valeur de perte sur la base d'une comparaison entre l'image débruitée et l'image propre ; et
la mise à jour (616) d'un ou plusieurs paramètres du modèle d'apprentissage automatique sur la base de la valeur de perte.

9. Procédé mis en œuvre par ordinateur selon la revendication 8, dans lequel l'écart type du bruit est une combinaison d'un bruit de lecture et d'un bruit de grenaille, dans lequel le bruit de lecture est un écart type pour le bruit indépendant du signal et le bruit de grenaille est un écart type pour le bruit dépendant du signal, dans lequel le bruit de lecture et le bruit de grenaille sont sélectionnés aléatoirement.

10. Procédé mis en œuvre par ordinateur selon la revendication 8, dans lequel la génération de la nouvelle carte temporelle comprend la soustraction d'un scalaire à une valeur de pas de temps respective pour chaque pixel dans la carte temporelle, dans lequel le scalaire a une valeur comprise entre zéro et une valeur de pas de temps maximale dans la carte temporelle.

11. Procédé mis en œuvre par ordinateur selon la revendication 8, dans lequel la génération de l'image de pas de temps actuelle sur la base de la nouvelle carte temporelle comprend l'échantillonnage d'un bruit sur la base de la nouvelle carte temporelle.

12. Procédé mis en œuvre par ordinateur selon la revendication 11, dans lequel l'image de pas de temps actuelle a une distribution de bruit similaire à une distribution de bruit de l'image d'entrée bruitée.

13. Procédé mis en œuvre par ordinateur selon la revendication 8, dans lequel le modèle d'apprentissage automatique comporte un réseau neuronal, et dans lequel la mise à jour des un ou plusieurs paramètres du modèle d'apprentissage automatique sur la base de la valeur de perte comprend la réalisation d'une rétropropagation pour ajuster les poids d'un ou plusieurs nœuds du réseau neuronal.

14. Procédé mis en œuvre par ordinateur selon la revendication 8, dans lequel l'obtention de l'image propre, la génération de l'image d'entrée bruitée, l'estimation de la carte temporelle, la génération de la nouvelle carte temporelle, la génération de l'image de pas de temps actuelle, l'estimation de l'image débruitée, le calcul de la valeur de perte et la mise à jour des un ou plusieurs paramètres du modèle d'apprentissage automatique sont réalisées de manière itérative jusqu'à ce qu'un critère d'arrêt soit satisfait.

15. Procédé mis en œuvre par ordinateur selon la revendication 14, dans lequel le critère d'arrêt comporte un ou plusieurs des éléments suivants : l'épuisement d'un budget de calcul destiné à l'entraînement ou une modification des valeurs de paramètre d'au moins l'un des un ou plusieurs paramètres entre les itérations successives tombant en dessous d'un seuil.
